Europäisches Patentamt

European Patent Office

Office européen des brevets

(19)

(11) EP 1 359 673 A1

(12) EUROPEAN PATENT APPLICATION

(43) Date of publication:
05.11.2003 Bulletin 2003/45

(51) Int Cl.7: H04B 1/10, H03F 1/26, H04L 27/00

(21) Application number: 03100878.2

(22) Date of filing: 02.04.2003

(84) Designated Contracting States:
AT BE BG CH CY CZ DE DK EE ES FI FR GB GR
HU IE IT LI LU MC NL PT SE SI SK TR
Designated Extension States:
AL LT LV MK RO

(30) Priority: 30.04.2002 GB 2098309

(71) Applicant: Zarlink Semiconductor Limited
Swindon, Wiltshire SN2 2QW (GB)

(72) Inventors:
• Cowley, Nicholas, Paul
SN4 0RT, Wroughton (GB)

• Kan, Chi Man
SN2 1BD, Swindon (GB)
• Atkien, Matthew
SN25 4XT, Swindon (GB)

(74) Representative: Robinson, John Stuart
Marks & Clerk,
4220 Nash Court,
Oxford Business Park South
Oxford, Oxfordshire OX4 2RU (GB)

(54) **Radio frequency tuner front end with adaptive supply current**

(57) A circuit stage such as an input stage is provided for a radio frequency tuner having an input 1 which typically receives a broadband signal comprising many channels. The input stage comprises a low noise amplifier 2 in the form of a long tail pair of transistors 4 and 5 and a controllable tail current source 10, 11. A level detector 3 detects the signal level at the input of the amplifier 2 and controls the tail current source 10, 11 so as to increase the tail current as the signal amplitude rises above a threshold level and so as to keep the tail current fixed when the signal amplitude is below the threshold level.

Fig. 1

EP 1 359 673 A1

## Description

The present invention relates to circuit stage for a radio frequency tuner. The invention also relates to a radio frequency tuner incorporating such circuit stage.

Known types of radio frequency tuners are based on superheterodyne techniques. A broadband radio frequency signal containing many channels available for reception is supplied to the tuner input, for example from a terrestrial aerial, a satellite aerial system or a cable distribution system. The tuner is arranged to select any desired one of the channels for reception and converts this to a standard intermediate frequency signal which is then supplied to a demodulator.

In a typical known type of tuner, for example of the dual conversion type, the broadband input signal is supplied to a low noise amplifier (LNA) input stage, whose output is supplied to a frequency changer or a first frequency changer for converting the frequency of the selected channel to the or the first intermediate frequency. There are no tracking filters between the tuner input and the LNA for attenuating any of the non-selected channels so that a relatively high signal level may be presented to the input of the LNA.

The LNA typically comprises a long tail pair of transistors whose tail current must be sufficiently large to ensure that the LNA provides adequate intermodulation distortion performance, such as IP3 performance, for acceptable reception. In particular, the tail current must be sufficient to provide the necessary performance when the maximum theoretical total input power is applied to the input of the LNA. This maximum theoretical power would only be achieved if each channel where at its maximum signal level and the signals of all of the channels in the broadband signal were in phase. In practice, such a condition is unlikely to occur so that the total input power supplied to the LNA input is generally much less than the theoretical maximum value. However, in order to provide acceptable performance under all possible conditions, the tail current of the LNA is set to a value which would provide acceptable performance in the worst possible case.

GB 2 363 523 discloses a transceiver for use as a mobile telephone. The receiver section has an LNA whose bias current is controlled by a baseband signal processor. The main purpose of this is to vary the LNA bias current in accordance with transmitter power of the transmitting section so as to minimise power consumption (for example during standby mode) but to increase the bias current to maintain adequate performance in the presence of strong leakage signals from the transmitter section. The signal level present at the LNA is inferred without making any level measurements at this stage.

WO 01/73958 is also principally concerned with mobile telephone applications and discloses arrangements which vary the bias current in accordance with the signal level through various stages of a receiver including what amounts to an LNA. In this case, the signal level at the output of the stage is measured and used to determine the appropriate bias current for the stage.

According to a first aspect of the invention, there is provided circuit stage for a radio frequency tuner, comprising: a signal processing stage having a controllable supply current; and a level detector for detecting the signal level at the signal processing stage and for controlling the controllable supply current to have a first magnitude when the detected level has a first value and a second magnitude greater than the first magnitude when the detected level has a second value greater than the first value, characterised in that the level detector is arranged to increase the magnitude of the controllable supply current with increasing detected level above a threshold level and to maintain the controllable supply current fixed for detected levels below the threshold level.

The level detector may be arranged to increase the magnitude monotonically with increasing detected level above the threshold level.

The signal processing stage may comprise a first long tail pair of transistors and the controllable supply current may comprise the tail current of the first long tail pair. The signal processing stage may comprise a controlled current source for supplying the tail current. The controlled current source may comprise a fixed current source and a variable source. The variable current source may comprise an output stage of a first current mirror.

The level detector may comprise at least one envelope detector. The or each envelope detector may comprise the base-emitter junction of a bipolar transistor and a capacitor connected to the emitter of the transistor. The circuit stage may comprise a second long tail pair of transistors whose inputs are connected to outputs of first and second of the envelope detectors.

The level detector may comprise a voltage to current output stage. The output stage may comprise a third long tail pair of transistors. The third long tail pair may have outputs connected to a second current mirror. The output of the second current mirror may be connected to an input stage of the first current mirror.

The signal processing stage may comprise an amplifier, such as a low noise amplifier or an intermediate frequency amplifier.
The signal processing stage may comprise a baseband stage.
The signal processing stage may comprise a mixer

According to a second aspect of the invention, there is provided a radio frequency tuner having circuit stage according to the first aspect of the invention.

It is thus possible to provide an arrangement in which the supply current, such as the tail current of a long tail pair of transistors, is controlled in accordance with the signal level presented to the circuit stage. Such an arrangement allows the supply current to be set to a value which provides adequate distortion performance for the signal power supplied to the circuit stage while allowing the supply current to be reduced as compared with known arrangements as described hereinbefore. It is thus possible to obtain an improvement in the noise performance of the circuit stage. For example, where the circuit stage is embodied by bipolar transistors, the shot noise can be reduced so that the noise figure is reduced for much of the time.

The invention will be further described, by way of example, with reference to the accompanying drawings, in which:

Figure 1 is a block schematic diagram of a tuner input stage constituting an embodiment of the invention;

Figure 2 is a circuit diagram of a first example of a level detector of the input stage of Figure 1;

Figure 3 is a circuit diagram of the output stage of the level detector of Figure 2 illustrating the operation thereof;

Figure 4 is a circuit diagram illustrating a controllable tail current source of the input stage of Figure 1;

Figure 5 is a circuit diagram of a second example of the level detector of the input stage of Figure 1;

Figure 6 is a circuit diagram of a third example of the level detector of the input stage of Figure 1;

Figure 7 and 8 are circuit diagrams of alternative arrangements of controlled tail current sources; and

Figure 9 is a block schematic diagram of a tuner including the input stage of Figure 1.

Like reference numerals refer to like parts throughout the drawings.

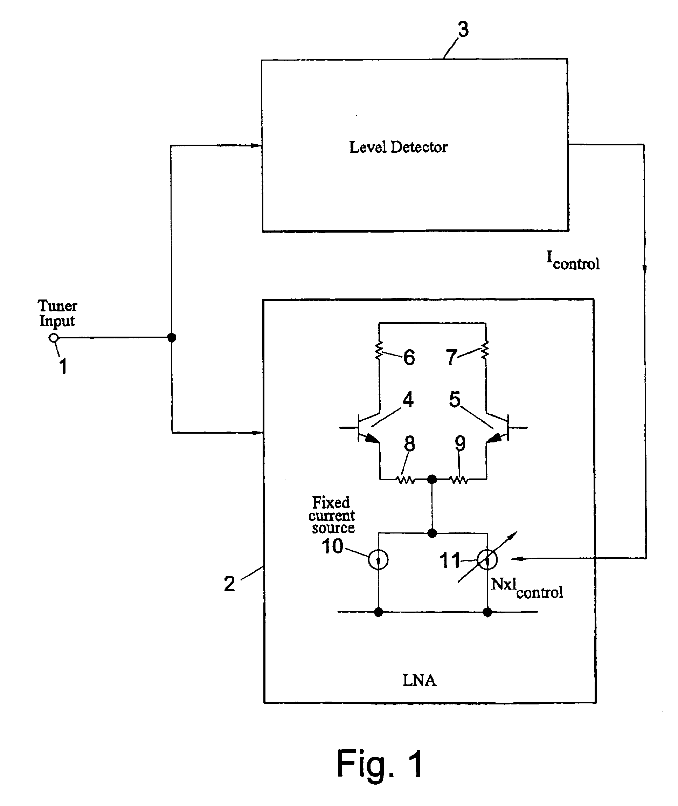

The radio frequency tuner input stage shown in Figure 1 is intended for use at the input of a tuner with no channel-selective filtering ahead of the input stage. For example, there may be fixed filtering to attenuate signals outside the desired reception range but no filtering to attenuate any of the channels within that range. However, the input stage could also be used in tuners which do have some input filtering to attenuate channels other than the one currently selected for reception.

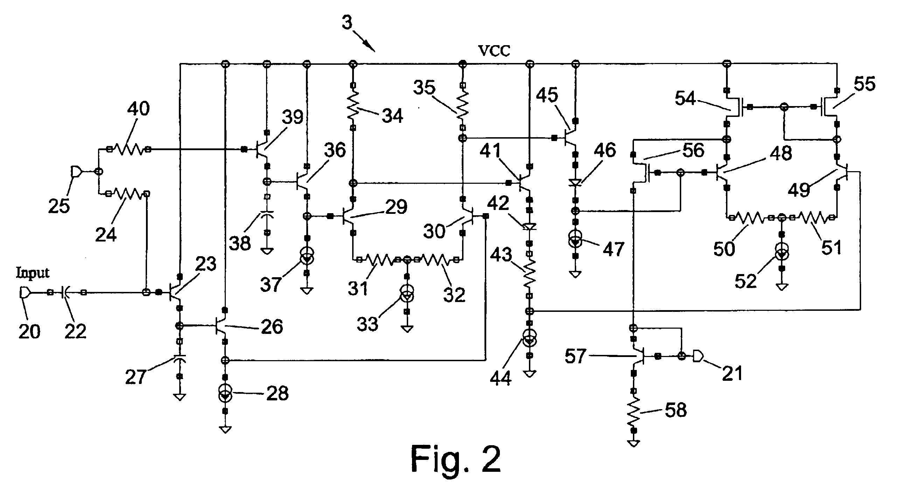

The tuner input 1 is connected to the inputs of an LNA 2 and a level detector 3. The LNA 2 comprises a differential stage of generally known type and illustrated schematically in Figure 1 as a long tail pair of bipolar transistors 4 and 5 having collector load resistors 6 and 7 and emitter degeneration resistors 8 and 9 connected to a tail current source. The tail current source comprises a fixed current source 10, and a controlled source 11, which receives a control current $I_{control}$ from the level detector 3 and supplies a current N times the current $I_{control}$ in addition to the fixed current provided by the source 10. A first example of the level detector 3 is shown in Figure 2 and comprises an input 20 connected to the tuner input 1 and an output 21 connected to the controllable current source 11. The input 20 is connected via a DC-blocking coupling capacitor 22 to the base of a bipolar transistor 23 which is also connected via an isolating resistor 24 to a bias voltage source at a circuit node 25. The collector of the transistor 23 is connected to a supply line VCC whereas the emitter thereof is connected to the base of a transistor 26 and to a first terminal of a capacitor 27, whose second terminal is connected to ground gnd. The collector of the transistor 26 is connected to the supply line VCC and the emitter thereof is connected via a constant current source 28 to ground gnd.

The base-emitter junction of the transistor 23 and the capacitor 27 form an envelope detector to provide a representation of the level or magnitude of the signal at the tuner input 1. The base-emitter junction of the transistor 23 acts as a half wave rectifier so that the capacitor 27 is charged by alternate half cycles of the input signal which exceed the voltage across the capacitor 27 plus the base-emitter voltage drop of the transistor 23. A charge leakage path exists through the base-emitter junction of the transistor 26 so that the voltage across the capacitor 27 follows rising signal levels relatively quickly but falls more slowly when the input signal level is reduced. The transistor 26 and the current source 28 act as an emitter follower for providing the appropriate leakage current and for supplying a signal representative of the input signal level to the following stage.

The following stage comprises an amplifier in the form of a long tail pair of transistors 29 and 30 whose emitters are connected via emitter degeneration resistors 31 and 32 to another constant current source 33. The collectors of the transistors 29 and 30 are connected via load resistors 34 and 35 to the supply line VCC and form the outputs of the amplifying stage. The base of the transistor 30 is connected to the emitter of the transistor 26. The base of the transistor 29 is connected to another emitter follower comprising a transistor 36 and a constant current source 37. The base of the transistor 36 is connected to another envelope follower comprising a capacitor 38 and a transistor 39 whose base is connected via an isolating resistor 40 to the bias voltage source.

The transistors 36 and 39 and associated components are substantially identical to the transistors 26 and 23, respectively, and their associated components so that the inputs of the amplifying stage are balanced at DC.

The outputs of the amplifying stage are connected to respective level shifting circuits. In particular, the collector of the transistor 29 is connected to the base of a transistor 41, whose collector is connected to the supply line VCC and whose emitter is connected via a forward-biased diode 42, a resistor 43 and a constant current source 44 to ground gnd. The connection between the resistor 43 and the constant current source 44 constitutes the output of the level shifting circuit.

The collector of the transistor 30 is connected to the base of a transistor 45 of the other level shifting circuit. The collector of the transistor 45 is connected to the supply line VCC whereas the emitter of the transistor 45 is connected via a forward-biased diode 46 and a constant current source 47 to ground gnd. The connection between the diode 46 and the constant current source 47 forms the output of the level shifting circuit, which differs from that based on the transistor 41 in that there is no resistor between the diode 46 and the constant current source 47.

The outputs of the level shifting circuits are connected to an output stage of the level detector 3 in the form of a voltage-to-current converter. In particular, the output stage comprises a long tail pair of transistors 48 and 49 whose emitters are connected via emitter degeneration resistors 50 and 51 to a constant current source 52. The collectors of the transistors 48 and 49 are connected to a current mirror formed by MOS field effect transistors 54 and 55, respectively. The transistor 55 comprises the current mirror input stage and has its gate and drain connected to the collector of the transistor 49 and its source connected to the supply line VCC. The transistor 54 comprises the output stage of the current mirror and has its gate connected to the gate and drain of the transistor 55, its source connected to the supply line VCC and its drain connected to the collector of the transistor 48 and to the source of another MOS field effect transistor 56. The transistor 56 is connected in the cascode mode with its gate connected to the base of the transistor 48 and to the output of the level shifting circuit based on the transistor 45. The drain of the transistor 56 is connected to the input stage of a current mirror comprising a transistor 57 whose emitter is connected to ground gnd via a resistor 58 and whose base is connected to its collector and to the output terminal 21 of the level detector.

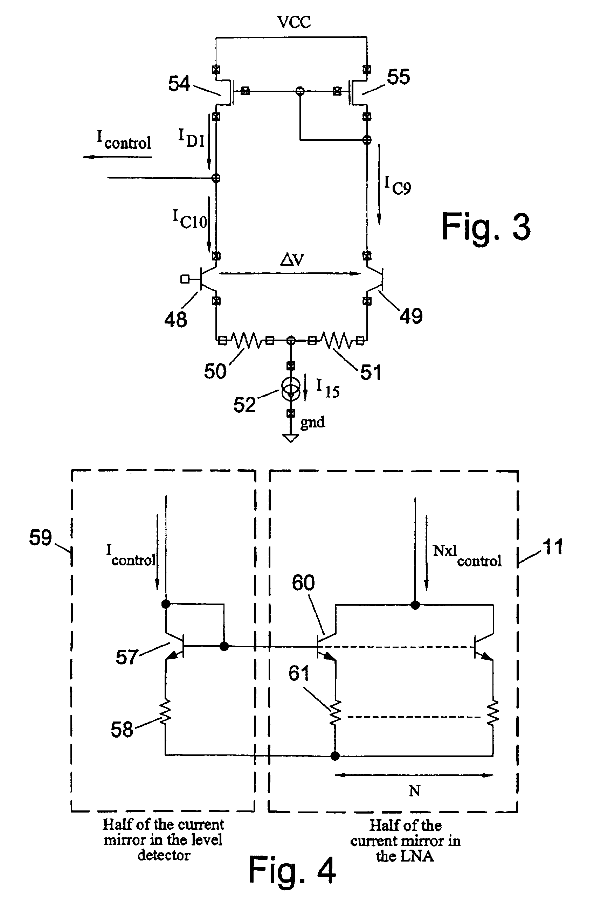

The whole of the current mirror is illustrated in Figure 4 and comprises the input stage 59 and an output stage in the form of the controlled current source 11 shown in Figure 1. The current source 11 comprises N transistors such as 60, all of which are substantially identical to the transistor 57, and N emitter resistors such as 61, all of which have the same resistance as the resistor 58. The collectors of the transistors such as 60 are connected together and form the output of the controllable current source 11. The controllable current source 11 thus supplies a current which is N times the value of the current $I_{control}$ through the input stage 59 of the current mirror.

The current mirror comprising the transistors 57 and 60 is of relatively simple type and is shown by way of example only. More complex current minors of improved performance may be used but are not described herein as they are well known in the art. In the absence of any input signal at the tuner input 1 and hence at the input 20 of the level detector 3, there is no potential difference between the emitters of the transistors 23 and 39. The differential output voltage of the amplifier stage comprising the transistors 29 and 30 is therefore also zero. The current provided by the current source 44 in the level shifting stage based on the transistor 41 causes a voltage drop across the resistor 43 so that the base of the transistor 49 is at a lower voltage than the base of the transistor 48. A larger portion of $I_{15}$ is steered to the transistor 48 so that $I_{C10}$ is larger that $I_{c9}$. Because of the action of the current mirror comprising the transistors 54 and 55, $I_{D1}$ must be a copy of $I_{c10}$. $I_{D1}$ is therefore equal to $I_{c10}$ and $I_{control}$ is zero. The current mirror comprising the transistors 57 and 60 therefore supplies zero current and the tail current of the long tail pair of transistors 4 and 5 forming the LNA 2 is at a minimum value and is determined by the output current of the fixed current source 10.

When a signal of sufficient amplitude is present at the input 20, this is half-wave rectified by the base-emitter junction of the transistor 23 and charges up the capacitor 27. The charge on the capacitor 38 remains constant so that a potential difference exists between the emitters of the transistors 23 and 39 and is supplied via the emitter followers comprising the transistors 26 and 36 to the bases of the transistors 29 and 30 of the amplifying stage. This is amplified by the amplifying stage and supplied to the level shifting circuits, where the voltage drop across the resistor 43 is subtracted from the potential difference supplied to the bases of the transistors 49 and 48. The resulting potential difference $\Delta V$ is illustrated in Figure 3 together with the current $I_{C9}$ flowing through the transistors 49 and 55, the current mirror output current $I_{D1}$, the collector current $I_{C10}$ of the transistor 48, and the control current $I_{control}$ which is equal to $(I_{D1}-I_{C10})$. The tail current supplied by the constant current source 52 is $I_{15}$.

When the potential difference $\Delta V$ is equal to zero, the tail current $I_{15}$ is steered equally between the transistors 48 and 49 so that the collector currents $I_{C9}$ and $I_{C10}$ are equal to each other. When the potential difference $\Delta V$ is greater than zero, a larger portion of the tail current is steered through the transistor 49 so that $I_{C9}$ is greater than $I_{C10}$ and, because of the current mirror action, $I_{D1}$ is equal to $I_{C9}$ and hence is greater than $I_{C10}$. The sum of $I_{C9}$ and $I_{C10}$ has to be equal to the tail current $I_{15}$ so that $I_{C9}$ is equal to the difference between $I_{15}$ and $I_{C10}$. The control current $I_{control}$ is thus given by:

$$I_{control} = I_{D1} - I_{C10} = I_{C9} - I_{C10} = I_{15} - 2\,I_{C10}.$$

If the potential difference $\Delta V$ is large enough such that $I_{C10}$ is zero, the control current $I_{control}$ is equal to $I_{15}$. Thus, the control current $I_{control}$ can vary between

zero and $I_{15}$ and hence the tail current of the LNA can be varied between the current supplied by the fixed current source 10 and the sum of the current supplied by the fixed current source and N times $I_{15}$. In general, the maximum LNA tail current is arranged to be sufficient to provide acceptable distortion performance of the LNA when the theoretical maximum input signal power is supplied to the tuner input 1.

The voltage drop across the resistor 43 provides a "delay" such that the amplitude or level of the input signal must be greater than a threshold level (resulting in the potential difference between the collectors of the transistors 29 and 30 exceeding the voltage drop across the resistor 43) in order for $I_{control}$ to have a non-zero value. The emitter degeneration resistors 50 and 51 help to linearise the transconductance of the output stage and likewise the emitter degeneration resistors 31 and 32 help to linearise the transfer function of the amplifying stage. Above the input threshold level, the control current $I_{control}$ is therefore substantially proportional to the input signal level and is a monotonic function thereof.

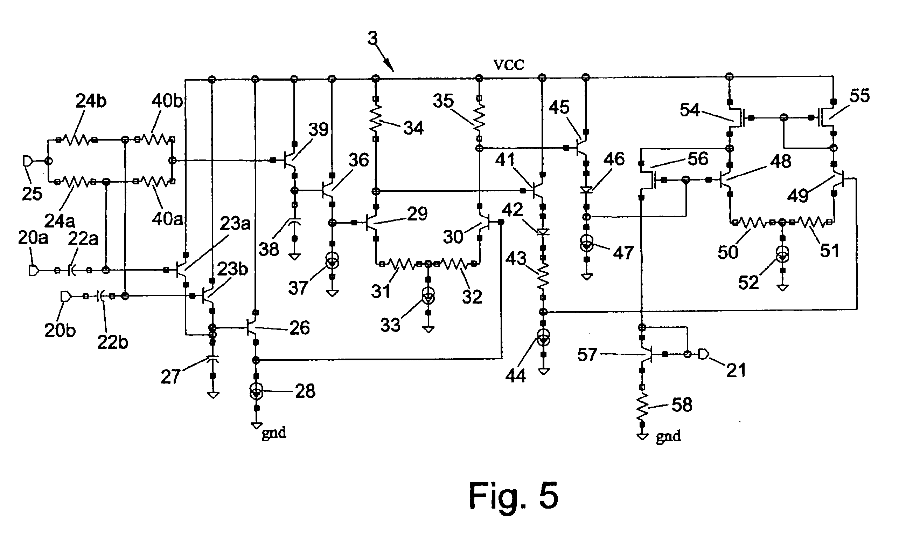

Figure 5 shows another example of the level detector 3 which differs from that shown in Figure 2 in that it has differential inputs 20a and 20b for receiving a differential input signal. The level detector comprises two envelope detectors based on transistors 23a and 23b and the common capacitor 27 connected to the emitters thereof. The bases of the transistors 23a and 23b are connected via respective coupling capacitors 22a and 22b to the respective inputs 20a and 20b. The bases of the transistors 23a and 23b are also connected via respective isolating resistors 24a and 24b to the bias voltage source node 25. The base of the transistor 39 is connected via isolation resistors 40a and 40b to the bases of the transistors 23a and 23b, respectively, so as to maintain DC balance at the inputs of the amplifying stage.

The differential inputs and the two envelope followers provide full-wave rectification of the differential input signal. Thus, the capacitor 27 is charged by each half cycle of the input signal and hence provides a shorter sampling time of the input signal by the level detector than the input arrangement of Figure 2.

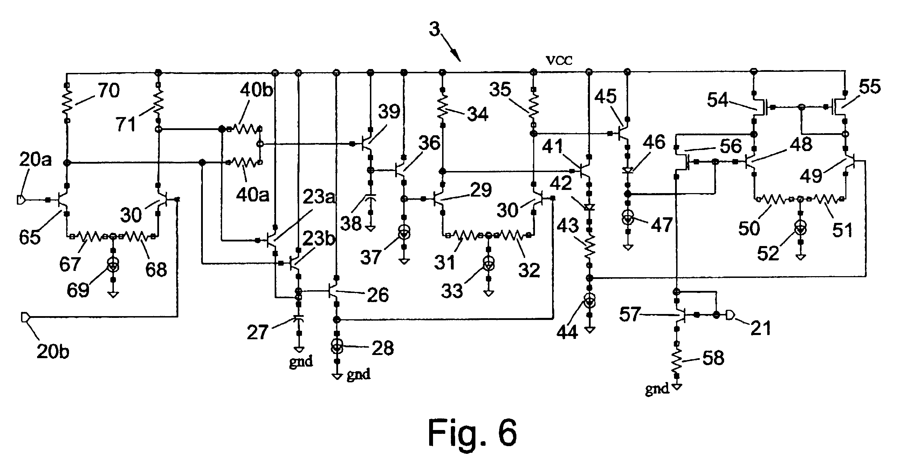

Figure 6 shows an example of the level detector 3 having differential inputs 20a and 20b. However, this level detector may also be used with a single-ended input signal with one of the inputs 20a and 20b connected to ground gnd. In either case, the level detector provides full-wave rectification in the same way as the level detector shown in Figure 5.

The differential inputs 20a and 20b are connected to the bases of a long tail pair of transistors 65 and 66 whose emitters are connected via respective emitter degeneration resistors 67 and 68 to a constant current source 69. The collectors of the transistors 65 and 66 are connected via respective load resistors 70 and 71 to the supply line VCC. The collectors of the transistors 65 and 66 are also connected to the bases of the transistors 23a and 23b, respectively, and via respective resistors 40a and 40b to the base of the transistor 39. The bias voltage source is not therefore needed and balanced DC conditions are maintained at the inputs of the amplifying stage.

The long tail pair of transistors 65 and 66 allows connection of a balanced or differential input signal but also converts a single-ended signal to a differential signal for full-wave rectification in the envelope detectors 23a, 23b, 27. The long tail pair of transistors 65 and 66 may also provide voltage gain so as to adjust the input signal level before being rectified in the envelope detectors.

It is thus possible to control the tail current, and hence the supply current, of an LNA in accordance with the signal amplitude present at the LNA input. The average supply current of the LNA is therefore reduced as compared with a known arrangement in which a sufficiently large constant tail current is provided to cope with the worst-case maximum input signal power which may be supplied to the LNA input. When using bipolar transistors in the LNA, such as in the long tail pair configuration, the shot noise generated by the bipolar transistors can be reduced so that the noise figure of the LNA can be reduced during usual operating conditions.

Although use of the present techniques in an LNA forming the input stage of a radio frequency tuner has been described in detail, such techniques may be applied to other stages of a tuner, such as a mixer, an intermediate frequency amplifier or a baseband stage, or to several stages of a tuner. In particular, where the signal level applied to a stage may vary during use, these techniques may be applied to any such signal processing stage in order to provide a reduction in current consumption and an improvement in noise performance. Also, although the detailed circuit arrangements described hereinbefore provide a level detector which detects the signal level at the input of the signal processing stage, the level at the output of such a stage may instead be detected in order to control the supply current.

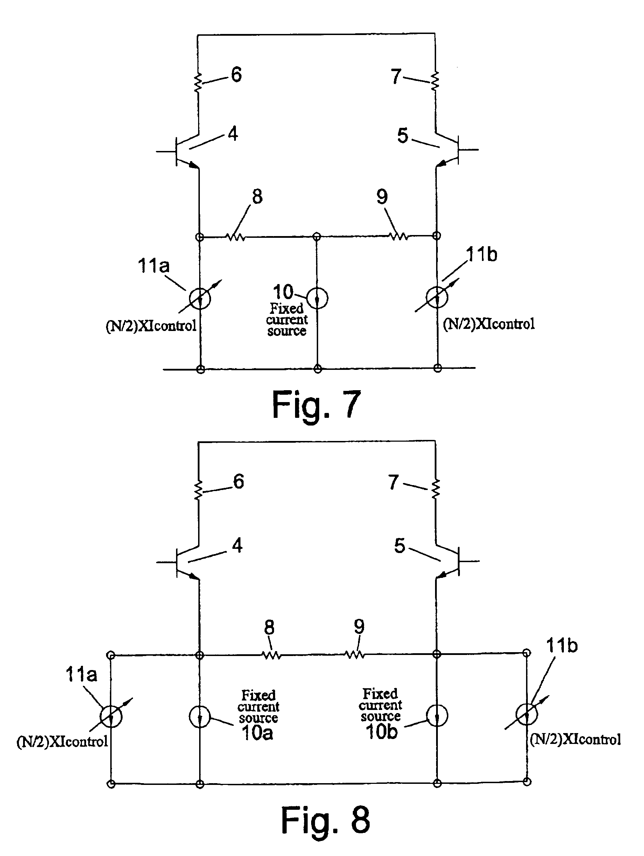

Further, the long tail pair of transistors 4 and 5 is shown in Figure 1 as having a "T-configuration" current supply with the fixed and controlled current sources 10 and 11 being connected via the emitter degeneration resistors 8 and 9 to the emitters of the transistors 4 and 5, respectively. However, this current supply may be replaced by a "Π configuration" as illustrated in Figures 7 and 8. In Figure 7, the fixed current source 10 is connected in the same way as shown in Figure 1. However, the controlled current source 11 is replaced by two controlled current sources 11a and 11b, each of which is arranged to supply N/2 x the current $I_{control}$. The current sources 11a and 11b are connected directly to the emitters of transistors 4 and 5, respectively. In Figure 8, the single fixed current source 10 is replaced by fixed current sources 10a and 10b, which supply half of the fixed current of source 10 and which are connected directly to the emitters of the transistors 4 and 5, respectively. Such Π - configuration current supplies have the advantage of reducing or avoiding the voltage drop across the emitter degeneration resistors 8 and 9, which otherwise might cause headroom problems for the various current sources.

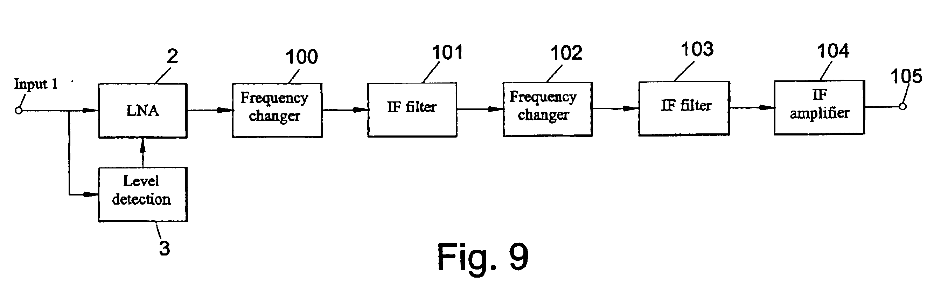

Figure 9 illustrates diagrammatically a typical tuner arrangement in which the radio frequency input 1 is connected to the LNA 2 and the level detector 3 shown in Figure 1. The output of the LNA 2 is supplied to a first frequency changer 100, which converts the frequency of a selected channel to a first high intermediate frequency (IF). The output of the frequency changer 100 is supplied to an IF filter 101 having a passband characteristic substantially centred on the IF. The filter 101 thus passes the selected channel at the IF and adjacent channels to the input of a second frequency changer 102.

The second frequency changer 102 converts the selected channel at the first IF to a second intermediate frequency, which may be zero or near zero or may be of the order of a few tens of MHz. The output of the frequency changer 102 is supplied to a further IF filter 103 having a passband which passes the selected channel and substantially rejects all other channels. The output of the filter 103 is supplied to the input of an IF amplifier 104, whose output is connected to the output 105 of the tuner.

**Claims**

1. A circuit stage for a radio frequency tuner, comprising a signal processing stage (2) having a controllable supply current; and a level detector (3) for detecting the signal level at the signal processing stage (2) and for controlling the controllable supply current to have a first magnitude when the detected level has a first value and a second magnitude greater than the first magnitude when the detected level has a second value greater than the first value, **characterised in that** the level detector (3) is arranged to increase the magnitude of the controllable supply current with increasing detected level above a threshold level and to maintain controllable supply current fixed for detected levels below the threshold level.

2. A circuit stage as claimed in claim 1, **characterised in that** the level detector (3) is arranged to increase the magnitude monotonically with increasing detected level above the threshold level.

3. A circuit stage as claimed in claim 1 or 2, **characterised in that** the signal processing stage (2) comprises a first long tail pair of transistors (4,5) and the controllable supply current comprises the tail current of the first long tail pair (4,5).

4. A circuit stage as claimed in claim 3, **characterised in that** the signal processing stage (2) comprises a controlled current source (10,11) for supplying the tail current.

5. A circuit stage as claimed in claim 4, **characterised in that** the controlled current source comprises a fixed current source (10) and a variable current source (11).

6. A circuit stage as claimed in claim 5, **characterised in that** the variable current source (11) comprises an output stage (60,61) of a first current mirror (57-61).

7. A circuit stage as claimed in any one of the preceding claims, **characterised in that** the level detector (3) comprises at least one envelope detector (23,23a,23b,27,38,39).

8. A circuit stage as claimed in claim 7, **characterised in that** the or each envelope detector comprises the base-emitter junction of a bipolar transistor (23,23a, 23b,39) and a capacitor (27,38) connected to the emitter of the transistor (23,23a,23b,39).

9. A circuit stage as claimed in claim 7 or 8, **characterised by** comprising a second long tail pair of transistors (29,30) whose inputs are connected to outputs of first and second of the envelope detectors (23,23a,23b,27,38,39).

10. A circuit stage as claimed in any one of the preceding claims, **characterised in that** the level detector (3) comprises a voltage to current output stage (48-56).

11. A circuit stage as claimed in claim 10, **characterised in that** the output stage (48-56) comprises a third long tail pair of transistors (48,49).

12. A circuit stage as claimed in claim 11, **characterised in that** the third long tail pair (48,49) has outputs connected to a second current mirror (54-56).

13. A circuit stage as claimed in claim 12 when dependent on claim 6, **characterised in that** the output of the second current mirror (54-56) is connected to an input stage (57-59) of the first current mirror (57-61).

14. A circuit stage as claimed in any one of the preceding claims, **characterised in that** the signal processing stage (2) comprises an amplifier.

15. A circuit stage as claimed in claim 14, **character-**

**ised in that** the amplifier comprises a low noise amplifier (2).

16. A circuit stage as claimed in claim 14, **characterised in that** the amplifier comprises an intermediate frequency amplifier.

17. A circuit stage as claimed in any one of claims 1 to 13, **characterised in that** the signal processing stage comprises a baseband stage.

18. A circuit stage as claimed in any one of claims 1 to 13, **characterised in that** the signal processing stage comprises a mixer.

19. A radio frequency tuner **characterised by** having a circuit stage as claimed in any one of the preceding claims.

Fig. 1

Fig. 2

EP 1 359 673 A1

VCC

54    55

$I_{control}$    $I_{D1}$

$I_{C9}$

$I_{C10}$

Fig. 3

$\Delta V$

48    49

50    51

52    $I_{15}$

gnd

59    11

$I_{control}$    $N \times I_{control}$

60

57    61

58    N

Half of the current
mirror in the level
detector

Half of the
current mirror in
the LNA

Fig. 4

Fig. 5

Fig. 6

EP 1 359 673 A1

Fig. 7

Fig. 8

EP 1 359 673 A1

Input 1 → LNA (2) → Frequency changer (100) → IF filter (101) → Frequency changer (102) → IF filter (103) → IF amplifier (104) → 105

Level detection (3)

# Fig. 9

EP 1 359 673 A1

European Patent Office

**EUROPEAN SEARCH REPORT**

Application Number

EP 03 10 0878

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 73958 A (SONY ELECTRONICS INC) 4 October 2001 (2001-10-04) * page 5, paragraph 2; figure 1 * * page 1, paragraph 1 * --- | 1-16 | H04B1/10 H03F1/26 H04L27/00 |
| X | WO 99 30426 A (QUALCOMM INC) 17 June 1999 (1999-06-17) * page 25, line 8 - line 18 * * page 10, paragraph 3 * * figure 2 * * figure 5A * * figure 5B * --- | 1-16 | |
| X | EP 0 829 954 A (NOKIA MOBILE PHONES LTD) 18 March 1998 (1998-03-18) * figure 6 * * column 1, line 39 - line 58 * * column 2, line 55 - column 3, line 4 * * column 3, line 52 - column 5, line 35 * --- | 1-16 | |
| A | EP 0 366 485 A (MOTOROLA INC) 2 May 1990 (1990-05-02) * page 2, line 43 - line 51 * * page 1, paragraph 1 * * page 3, line 32 - line 34 * * page 3, line 58 - page 4, line 1; table 1 * * page 4, line 58 - page 5, line 2 * * page 5, line 15 - line 17 * * figure 1 * --- -/-- | 1-16 | TECHNICAL FIELDS SEARCHED (Int.Cl.7) H03G H03F H04B |

The present search report has been drawn up for all claims

| Place of search | Date of completion of the search | Examiner |
|---|---|---|
| BERLIN | 6 August 2003 | Douglas, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

EP 1 359 673 A1

## EUROPEAN SEARCH REPORT

**European Patent Office**

Application Number

EP 03 10 0878

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 94 06213 A (MOTOROLA INC) 17 March 1994 (1994-03-17) * page 1, line 26 - line 29 * * page 1, line 9 - line 10 * * page 2, line 29 - line 30 * * page 4, line 13 - line 17 * * page 4, line 29 - line 32 * * page 5, line 3 - line 20 * * figure 1 * * figure 2 * * figure 3 * * figure 4 * | 1-16 | |
| A | EP 0 814 567 A (LUCENT TECHNOLOGIES INC) 29 December 1997 (1997-12-29) * column 2, paragraph 1 * * column 3, line 29 - line 41 * * column 4, paragraph 1 * * column 5, line 43 - line 48 * * column 6, line 24 - line 27 * * column 6, line 41 - line 47 * * figure 1 * | | TECHNICAL FIELDS SEARCHED (Int.Cl.7) |

The present search report has been drawn up for all claims

| Place of search | Date of completion of the search | Examiner |
|---|---|---|
| BERLIN | 6 August 2003 | Douglas, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

16

**ANNEX TO THE EUROPEAN SEARCH REPORT
ON EUROPEAN PATENT APPLICATION NO.**

EP 03 10 0878

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2003

| Patent document cited in search report | | Publication date | Patent family member(s) | | Publication date |
|---|---|---|---|---|---|
| WO 0173958 | A | 04-10-2001 | AU<br>WO | 4973101 A<br>0173958 A1 | 08-10-2001<br>04-10-2001 |
| WO 9930426 | A | 17-06-1999 | US<br>AU<br>AU<br>BR<br>CA<br>CN<br>EP<br>JP<br>NO<br>US<br>WO | 6498926 B1<br>754973 B2<br>1632999 A<br>9813481 A<br>2313471 A1<br>1283334 T<br>1040586 A1<br>2001526485 T<br>20002931 A<br>6175279 B1<br>9930426 A1 | 24-12-2002<br>28-11-2002<br>28-06-1999<br>23-10-2001<br>17-06-1999<br>07-02-2001<br>04-10-2000<br>18-12-2001<br>31-07-2000<br>16-01-2001<br>17-06-1999 |
| EP 0829954 | A | 18-03-1998 | GB<br>BR<br>DE<br>DE<br>EP<br>JP<br>US | 2317289 A<br>9703780 A<br>69716547 D1<br>69716547 T2<br>0829954 A1<br>10107566 A<br>5990746 A | 18-03-1998<br>11-08-1998<br>28-11-2002<br>12-06-2003<br>18-03-1998<br>24-04-1998<br>23-11-1999 |
| EP 0366485 | A | 02-05-1990 | US<br>AT<br>DE<br>DE<br>EP | 5001776 A<br>120058 T<br>68921693 D1<br>68921693 T2<br>0366485 A2 | 19-03-1991<br>15-04-1995<br>20-04-1995<br>19-10-1995<br>02-05-1990 |
| WO 9406213 | A | 17-03-1994 | WO<br>US | 9406213 A1<br>5564094 A | 17-03-1994<br>08-10-1996 |
| EP 0814567 | A | 29-12-1997 | US<br>EP | 5809400 A<br>0814567 A2 | 15-09-1998<br>29-12-1997 |

For more details about this annex : see Official Journal of the European Patent Office, No. 12/82